## Europäisches Patentamt
## European Patent Office
## Office européen des brevets

(11) Veröffentlichungsnummer: **0 209 734**
**A1**

(12) # EUROPÄISCHE PATENTANMELDUNG

(21) Anmeldenummer: 86108401.0

(22) Anmeldetag: 19.06.86

(51) Int. Cl.4: **C02F 9/00** , C08G 65/46

(30) Priorität: 22.06.85 DE 3522467

(43) Veröffentlichungstag der Anmeldung:
28.01.87 Patentblatt 87/05

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Mitulla, Konrad, Dr.
Schwalbenweg 31
D-6700 Ludwigshafen(DE)
Erfinder: Hambrecht, Jürgen, Dr.
Am Klosterwald 31
D-4400 Münster-Hiltrup(DE)
Erfinder: Gausepohl, Hermann, Dr.
Neuweg 10
D-6704 Mutterstadt(DE)
Erfinder: Dreher, Hermann, Dr.
Im Waldwinkel 5
D-6104 Seeheim-Jugenheim 1(DE)
Erfinder: Brandt, Hermann, Dr.
Keltenstrasse 30
D-6707 Schifferstadt(DE)

(54) **Verfahren zur Rückgewinnung der Amin- und Metallkomponenten bei der Polyphenylenethersynthese.**

(57) Die Erfindung betrifft ein Verfahren zur Abtrennung und Wiederverwendung der Amin-, Komplexierungs-und Metallkomponenten aus dem Abwasser der Katalysatorabtrennung, die bei der Herstellung hochmolekularer Polyphenylether in Gegenwart eines organischen Lösungsmittels anfallen und durch Behandlung der Lösung in mit wäßrigen Komplexierungsmittel erhalten werden durch alkalisches Einstellen der wäßrigen Phase und Abscheiden des sich absetzenden Amins, Abtrennung des Komplexierungsmittels und Fällung der Kupferionen aus dem Filtrat.

## Verfahren zur Rückgewinnung der Amin-und Metallkomponenten bei der Polyphenylenethersynthese

Die Erfindung betrifft ein Verfahren zur Rückgewinnung und Wiederverwendung von Rückständen, die im Abwasser gelöst sind, welches bei der Polyphenylenethersynthese anfällt, bei der in einem ersten Schritt die oxidative Kupplung von Phenolen, mit Sauerstoff in Gegenwart eines Kupfer-Amin-Katalysators in organischen Lösungsmitteln durchgeführt würde und in einer zweiten Schritt eine Abtrennung des Katalysators mit Hilfe wäßriger Lösungen von Komplexierungsmitteln und/oder Kationenaustauscherhärzen erfolgte;

Es ist bereits bekannt, die Polymerisationsreaktion bei der Herstellung von Polyphenylenethern in organischen Lösungsmitteln dadurch zu unterbrechen, daß der Katalysator aus dem Reaktionsmedium entfernt wird. Dies geschieht durch Gegenstromextraktionsverfahren unter Verwendung von wäßrigen Lösungen von organischen oder anorganischen Säuren (vgl. US-A-3 630 995). Es werden auch Polycarbonsäuren oder Polyaminocarbonsäuren (vgl. US-A-3 838 102) oder andere Chelatisierungsmittel wie Nitrilotriessigsäure und ihre Natriumsalze oder Ethylendiamintetraessigsäure (EDTA) und ihre Natriumsalze (Na-EDTA) (vgl. US-A-3 951 917, 4 157 434 und EP-A1-131 243) eingesetzt, letztere auch in Kombination mit Ammoniumsalzen (vgl. US-A-4 062 970). Beschrieben ist auch die Katalysatorabtrennung mit Hilfe komplexbildender Mittel aus der Gruppe des Bisguanidins (vgl. US-A-4 097 458). In den Literaturstellen US-A-4 237 265 und EP-A1-131 243 ist auch bereits ein kontinuierliches Verfahren zur Katalysatorabtrennung beschrieben.

Unbefriedigend bei allen bisher bekannten Verfahren ist der Umstand, daß stets verdünnte kupferhaltige Lösungen anfallen, deren Aufarbeitung zunehmend Probleme macht.

Der Erfindung liegt deshalb die Aufgabe zugrunde, ein einfaches und hochwirksames Verfahren zur Abtrennung und Rückgewinnung der Katalysatorreste aus dem Abwasser der Katalysatorabtrennung aufzufinden, bei dem sowohl das Metall als auch das Komplexierungsmittel vollständig abgetrennt und zurückgewonnen wird.

Diese Aufgabe wird erfindungsgemäß durch ein Verfahren gemäß Patentansprüche 1 bis 6 gelöst.

Als Metallkomponente des Katalysators kommt dabei Kupfer in Frage, bei den Aminen handelt es sich üblicherweise um n-Dibutylamin, Diethylamin, Picolin, Chinolin, Pyridinbasen, Triisopropylamin, Dimethylisopropanolamin, Trisethanolamin, Triisopropanolamin, Diisopropanolamin und andere. Bei dem für die bekannte Polykondensation verwendeten Katalysatorkomplex handelt es sich üblicherweise um eine Kombination obiger Amine mit einem Kupfersalz wie Kupfer-I-bromid, Kupfer-I-chlorid, Kupfer-II-acetessigester oder Kupfer-II-acetylacetonat. Ein bevorzugter Bereich bei der Menge der eingesetzten Amine liegt bei 2,0 bis 25 Mol pro 100 Mol des Monomeren, die Konzentration der Amine kann aber in der Reaktionsmischung innerhalb weiter Grenzen variieren. Die Konzentration der Kupfersalze wird gering gehalten und variiert von 0,2 bis 2,5 Mol pro 100 Mol des Monomeren.

Die Herstellung hochmolekularer Polyphenylenether aus einwertigen Phenolen durch oxidative Kupplungsreaktion mit Sauerstoff bei Temperaturen zwischen 15 und 50°C in Anwesenheit eines Katalysatorkomplexes aus einem Kupfersalz und eiem organischen Amin in Gegenwart eines organischen Lösungsmittels ist so bekannt, daß sie hier nicht weiter beschrieben werden muß (vgl. z.B. die US-Patente 3 306 874, 3 306 875, 3 661 848, 3 378 505, 3 639 656 oder 3 642 699). Als organische Lösungsmittel werden Benzol, Toluol, Ethylbenzol und aliphatische $C_6$-bis $C_{10}$-Kohlenwasserstoffe, insbesondere Toluol, verwendet. Der Anteil des Lösungsmittels liegt üblicherweise im Bereich von 1:1 bis 10:1 Gewichtsteilen, d.h. maximal bis zu einem Überschuß des 20-fachen an Lösungsmittel, bezogen auf das monomere Phenol. Als Monomere kommen solche einwertigen Phenole in Betracht, die in den beiden ortho-Stellungen und gegebenenfalls in meta-Position, nicht aber in para-Stellung Alkylsubstituenten aufweisen. Beispiele geeigneter Phenole sind 2,6-Dimethylphenol, 2,6-Diethylphenol, 2-Methyl-6-ethylphenol oder 2,3,6-Trimethylphenol.

Wenn die Polykondensation die gewünschte Ausbeute und das Polymere das gewünschte Molekulargewicht erreicht hat, enthält die Lösung 5 bis 30 Gewichtsprozent Polyphenylenether, 0,005 bis 1,5 Gewichtsprozent Metallionen sind 0,1 bis 6,0 Gewichtsprozent Amin sowie gegebenenfalls geringe Mengen anderer Materialien. Diese polyphenylenetherhaltigen Reaktionslösungen werden üblicherweise zur Abtrennung der Metallkomponente des Katalysators mit einer wäßrigen Lösung eines Chelatisierungsmittels, z.B. bestehend aus Ethylendiamintetraessigsäure, abgekürzt EDTA, oder einer wäßrigen Lösung eines Salzes dieser Säure behandelt und es wird die wäßrige Phase als Abwasser abgetrennt (vgl. US-Patente 3 951 917, 4 157 484, 4 026 870, 4 463 164 und 4 071 500).

Durch das Chelatisierungsmittel wird das Überführen unter Chelatkomplexbildung der in dem organischen Medium gelösten Metallkomponente des Katalysators in einem wasserlöslichen Komplex bewirkt. Bezüglich der Wirkungsweise und der chemischen Zusammensetzung der gebildeten wasser löslichen Katalysatormetallverbindungen wird auf einschlägige Literaturstellen wie "Organic Reagens for Metals" Verlag Hoplein & Williams Ltd., London, E.C.1, (1934) und "Chemie der Komplexverbindungen -Spezieller Teil", F. Hein und B. Heyn, Verlag S. Hirzel, Leipzig (1978) verwiesen.

Nach erfindungsgemäßem Verfahren wird das Abwasser der Katalysatorabtrennstufe

a) in einem ersten Schritt alkalisch eingestellt, wobei sich mehr als 80 Gew.-%, bezogen auf das als Aminsalz vorliegende Amin, als Amin abscheiden,

b) in einem zweiten Schritt die für die Kupferabtrennung eingesetzten Komplexierungsmittel und/oder Kationenaustauscherharze aus dem Abwasser zu mehr als 90 Gew.-% zurückgewonnen und

c) in einem dritten Schritt die in der wäßrigen Lösung verbleibenden Kupferionen zu mehr als 95 Gew.-% zurückgewonnen.

Bevorzugt werden die Wertprodukte aus den Reinigungsschritten a) und b) in den Syntheseprozeß zurückgeführt, die Kupferionen elektrochemisch als Kupfermetall kathodisch an geeigneten Elektrodenoberflächen abgeschieden, es wird im Reinigungsschritt a) das Abwasser mit Natronlauge auf pH 11,5 gestellt, so daß mehr als 95 Gew.-% des Amins aus dem Aminsalz freigesetzt wird und im Reinigungsschritt b) die Abtrennung des Komplexierungsmittels durch Ansäuern auf pH-Werte unter 2 erfolgt, es wird nach der kathodischen Abtrennung das Kupfer durch Umpolung der elektrischen Spannung wieder in ein lösliches Salz überführt und es wird das kupferhaltige Filtrat mit Natriumhydrogensulfid bei pH-Werten von 4 bis 14 versetzt und das Kupfer als Kupfersulfid gefällt und abgetrennt.

Als Komplexierungsmittel wird bevorzugt eine wäßrige EDTA-Suspension oder eine wäßrige Lösung des Dinatriumsalzes oder Aminsalzes der EDTA eingesetzt.

Der Zusatz der Base für die Aminabtrennung erfolgt in einem üblichen Mischaggregat, wie Rührbehälter oder Pumpen in welchem die beiden Lösungen innig vermischt werden. Die Aminabtrennung selbst erfolgt in einem üblichen Abscheider, wie Schwerkraftabscheider, Absatzbehälter oder Zentrifugen in welchen die beiden Phasen getrennt werden. Als starke Base wird bevorzugt Natronlauge, als Säure bevorzugt Schwefelsäure oder insbesondere schweflige Säure eingesetzt. Zur Abtrennung des gefällten Kupfersulfids und des EDTA werden Siebbandpressen, Kammerfilterpressen und ganz besonders Vakuumfilter eingesetzt.

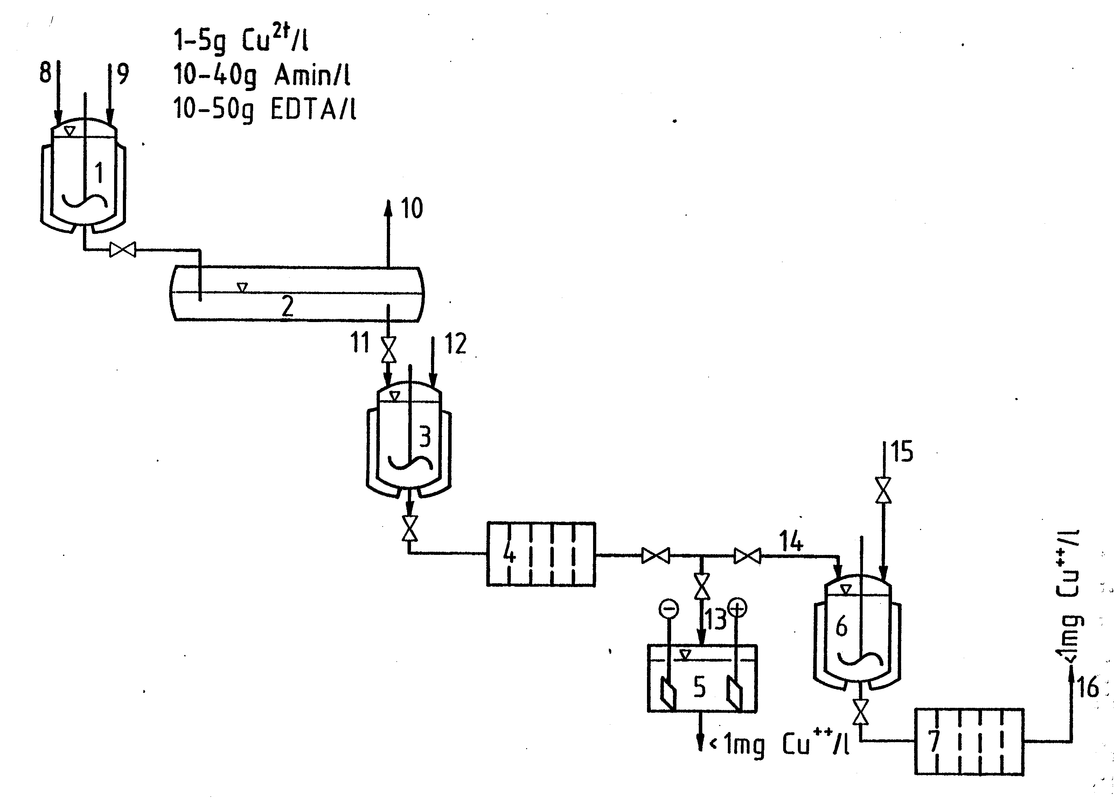

Die Figur zeigt ein Verfahrensfließbild für das erfindungsgemäße Verfahren zur Rückgewinnung des Kupfers, Amins und der eingesetzten Wertstoffe, bestehend aus einem Mischaggregat-Abscheider-Stufe für die Aminrückgewinnung und zwei Mischaggegat-Filtrationsstufen für die Rückgewinnung des Kupfers und der EDTA.

Dem Mischaggregat 1 fließt kontinuierlich kupfer-und aminhaltige wäßrige Lösung aus der Katalysatorabtrennstufe der PPE-Polymeren zu.

In der dritten Stufe im Mischaggregat 1 wird die wäßrige kupfer-und aminhaltige Lösung 8 mittel NaOH 9 auf pH 11,5 gestellt. Das abgeschiedene Amin 10 wird im Abscheider 2 abgetrennt. Die wäßrige Lösung wird im Mischkessel 3 mit, $H_2SO_4$, 50 %ig 12 versetzt, worauf die EDTA ausgefällt und mittels einer Siebbandpresse 4 abfiltriert wird. Das Cu-haltige Filtrat wird nun entweder einer Elektrolysezelle 5 zugeführt oder in einem weiteren Mischkessel 6 durch Einleiten von $H_2S$ die Cu-Ionen als CuS-ausgefällt und in einer weiteren Siebbandpresse 7 abgetrennt. In beiden Fällen erreicht man eine Abreicherung des Kupfers auf Werte von < 1 mg $Cu^{2+}$/l Abwasser.

## Ansprüche

1. Verfahren zur Rückgewinnung und Wiederverwendung von Rückständen, die im Abwasser gelöst sind, welches bei der Polyphenylenethersynthese anfällt, bei der in einem ersten Schritt die oxidative Kupplung von Phenolen mit Sauerstoff in Gegenwart eines Kupfer-Amin-Katalysators in organischen Lösungsmitteln durchgeführt wurde und in einem zweiten Schritt eine Abtrennung des Katalysators mit Hilfe wäßriger Lösungen von Komplexierungsmitteln und/oder Kationenaustauscherharzen erfolgte, dadurch gekennzeichnet, daß das Abwasser der Katalysatorabtrennstufe

a) in einem ersten Schritt alkalisch eingestellt wird, wobei sich mehr als 80 Gew.-%, bezogen auf das als Aminsalz vorliegende Amin, als Amin abscheiden,

b) in einem zweiten Schritt die für die Kupferabtrennung eingesetzten Komplexierungsmittel und/oder Kationenaustauscherharze aus dem Abwasser zu mehr als 90 Gew.-% zurückgewonnen werden und

c) in einem dritten Schritt die in der wäßrigen Lösung verbleibenden Kupferionen zu mehr als 95 Gew.-% zurückgewonnen werden.

2. Verfahren nach Anspruch 1, dadurch gekennzeichnet, daß die Wertprodukte aus den Reinigungsschritten a) und b) in den Syntheseprozeß zurückgeführt werden.

3. Verfahren nach Anspruch 1, dadurch gekennzeichnet, daß die Kupferionen elektrochemisch als Kupfermetall kathodisch an geeigneten Elektrodenoberflächen abgeschieden werden.

4. Verfahren nach Anspruch 1, dadurch gekennzeichnet, daß im Reinigungsschritt a) das Abwasser mit Natronlauge auf pH größer als 11 gestellt wird, so daß mehr als 95 Gew.-% des Amins aus dem Aminsalz freigesetzt wird und im Reinigungsschritt b) die Abtrennung des Komplexierungsmittels durch Ansäuern auf pH-Werte unter 2 erfolgt.

5. Verfahren nach Anspruch 1, dadurch gekennzeichnet, daß nach der kathodischen Abtrennung das Kupfer durch Umpolung der elektrischen Spannung wieder in ein lösliches Salz überführt wird.

6. Verfahren nach Anspruch 1, dadurch gekennzeichnet, daß das kupferhaltige Filtrat mit Natriumhydrogensulfid bei pH-Werten von 4 bis 14 versetzt wird und das Kupfer als Kupfersulfid gefällt und abgetrennt wird.

$1\text{-}5g\ Cu^{2+}/l$
$10\text{-}40g\ Amin/l$
$10\text{-}50g\ EDTA/l$

8  9

1

10

2

11  12

3

4

14

13

5

6

15

7

16

$<1mg\ Cu^{++}/l$

0 209 734

Z. 0050/37810

$<1mg\ Cu^{++}/l$

<table>
<tr><td colspan="2">Europäisches Patentamt</td><td><strong>EUROPÄISCHER RECHERCHENBERICHT</strong></td><td>Nummer der Anmeldung<br>EP 86 10 8401</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | US-A-4 071 500  (G.D. COOPER et al.)<br>* Patentansprüche; Beispiel 1 *<br><br>--- | 1-6 | C 02 F    9/00<br>C 08 G   65/46 |
| X | US-A-3 733 301  (M.M. MODAN)<br>* Patentansprüche; Zeilen 4,5 *<br><br>----- | 1-6 | |
| | | | **RECHERCHIERTE SACHGEBIETE (Int. Cl.4)**<br><br>C 02 F<br>C 08 G |

Der vorliegende Recherchenbericht wurde für alle Patentansprüche erstellt.

| Recherchenort | Abschlußdatum der Recherche | Prüfer |
|---|---|---|
| DEN HAAG | 19-09-1986 | DERAEDT G. |